# FASCICULE DE BREVET EUROPEEN

(11) **EP 1 020 631 B1**
(45) Date de publication et mention de la délivrance du brevet: **24.11.2004**
(21) Numéro de dépôt: 00400066.7
(22) Date de dépôt: 13.01.2000
(51) Int. Cl.: F02K 1/11, F02K 1/60

(54) **Tuyère d'éjection de turboréacteur à reverse intégrée**
Strahltriebdüse mit integrierter Schubumkehrvorrichtung
Ejection nozzle for turbojet with integrated thrust reverser

(30) Priorité: 14.01.1999 FR 9900293
(43) Date de publication de la demande: 19.07.2000
(73) Titulaire: SNECMA MOTEURS, 75015 Paris (FR)
(72) Inventeur: Charier, Gilles Alain, 77130 La Grande Paroisse (FR); Guyonnet, Xavier Jean-Michel André, 31300 Toulouse (FR); Rollin, Gilles Louis, 77115 Blandy les Tours (FR)

(56) Documents cités:
- EP-A- 0 761 947
- WO-A-97/48600
- US-A- 4 641 782
- US-A- 5 050 803
- US-A- 5 201 800

## Description

L'invention concerne un turboréacteur équipant un avion civil supersonique et comportant une tuyère d'éjection munie d'un dispositif d'inversion de poussée.

Plus précisément, l'invention concerne un turboréacteur équipant un avion supersonique et comportant une tuyère d'éjection, du type comportant un canal d'éjection disposé dans un carénage externe et par lequel s'écoule en fonctionnement un flux gazeux, une série de volets chauds montés pivotants à l'extrémité aval dudit canal, une série de volets froids montés pivotants à l'extrémité aval du carénage, un dispositif d'inversion de poussée comprenant deux paupières identiques montées pivotantes en aval du canal d'éjection, de part et d'autre d'un plan axial de symétrie, lesdites deux paupières occupant, soit une position d'inversion de poussée, dans laquelle elles font saillie transversalement dans le jet gazeux en aval des volets pour dévier ce jet vers l'avant, soit une position de jet direct, dans laquelle elles sont dans le prolongement des volets froids, des moyens de commande des volets chauds et des volets froids selon les configurations de vol, et des moyens de commande des paupières de la position de jet direct à la position d'inversion de poussée ou inversement de la position d'inversion de poussée à la position de jet direct.

Dans une telle tuyère, les paupières sont montées chacune sur la structure fixe de manière à pouvoir pivoter autour d'un axe transversal voisin du plan axial de symétrie, afin de pouvoir régler la section de sortie des gaz d'échappement du moteur en fonction des phases de vol. Toutefois, cette section ne varie que dans de faibles proportions. Or, les normes de bruit dans le voisinage des aéroports civils nécessitent de baisser les vitesses d'éjection des gaz, lors de la phase de décollage notamment.

Ces normes exigent donc une adaptation spéciale, car les débits de gaz sont considérables lors de la phase de décollage, le moteur étant à plein régime durant cette phase.

En outre, US-A-5 201 800 décrit une tuyère d'éjection de turboréacteur à volets primaires convergents et volets secondaires divergents, associé à des volets extérieurs.

Un réglage du contour de position des volets secondaires est effectué en fonction du rapport de pression des gaz entre l'entrée et la sortie de tuyère.

L'invention a pour but de proposer un turboréacteur du type mentionné ci-dessus qui permette de diminuer les bruits au décollage en augmentant la section des gaz.

L'invention atteint son but par le fait que la tuyère comporte des moyens pour écarter lesdites deux paupières du plan axial de symétrie dans la configuration de décollage.

Les nombreuses dispositions suivantes sont en outre adoptées :
- les volets froids sont actionnés pour assurer un profil aérodynamique sans obstacle avec lesdites deux paupières dans la configuration de décollage et la configuration de croisière ;
- les volets froids sont asservis aux volets chauds par des biellettes ;
- les deux paupières sont articulées aux extrémités de deux paires latérales de bras de support et aux extrémités d'au moins une paire de vérins, les bras de chaque paire de bras et les vérins de chaque paire de vérins étant disposés symétriquement par rapport au plan axial de symétrie et articulés à leurs autres extrémités sur une structure fixe, et lesdits vérins formant les moyens de commande des paupières ;
- les moyens pour écarter les paupières dans la configuration de décollage comportent un vérin interposé entre les bras d'une paire de bras ;
- les deux bras d'une paire de bras de support sont reliés par des secteurs dentés afin d'assurer le déplacement symétrique des axes d'articulation des paupières sur lesdits bras par rapport au plan axial de symétrie ;
- les vérins formant les moyens de commande des paupières peuvent être actionnés de manière antagoniste dans la configuration de décollage afin de dévier légèrement le flux gazeux éjecté.

D'autres avantages et caractéristiques de l'invention ressortiront à la lecture de la description suivante faite à titre d'exemple et en référence aux dessins annexés dans lesquels :
la figure 1 représente en coupe selon un plan vertical de symétrie une tuyère d'éjection des gaz d'un turboréacteur équipant un avion supersonique dans la configuration de croisière, selon la présente invention ;
la figure 2 montre, à plus grande échelle, l'arrière corps de la tuyère de la figure 1, et la position des volets dans la configuration de croisière ;
la figure 3 représente en coupe selon le plan vertical de symétrie, la tuyère de la figure 1 dans la configuration de décollage ;
la figure 4 montre à plus grande échelle l'arrière corps de la tuyère et la position des volets dans la configuration de décollage ;
la figure 5 représente, en coupe selon le plan vertical de symétrie, la tuyère de la figure 1 dans la configuration inversion de poussée ;
la figure 6 montre à plus grande échelle l'arrière corps de la tuyère dans la configuration inversion de poussée ; et
la figure 7 est semblable à la figure 4 et montre la position des volets et des vérins de commande dans la configuration de décollage avec déviation des gaz éjectés.

Les dessins montrent une tuyère 1 d'éjection des gaz issus d'un turboréacteur double corps double flux équipant un avion civil supersonique.

La turbine 2 de ce turboréacteur émet un flux chaud Fc dans un espace annulaire 3 entourant le cône 4 de la turbine 2. Un flux froid Ff est émis par un canal annulaire 5 entourant le carter extérieur 6 de la turbine 2. Le canal annulaire 5 est délimité extérieurement par une paroi interne 7 qui se prolonge vers l'aval, dans le sens de l'écoulement des gaz, au delà de l'extrémité du cône 4. La paroi interne 7 fait partie d'une structure annulaire fixe 8 qui est délimitée extérieurement par un carénage 9 à profil aérodynamique.

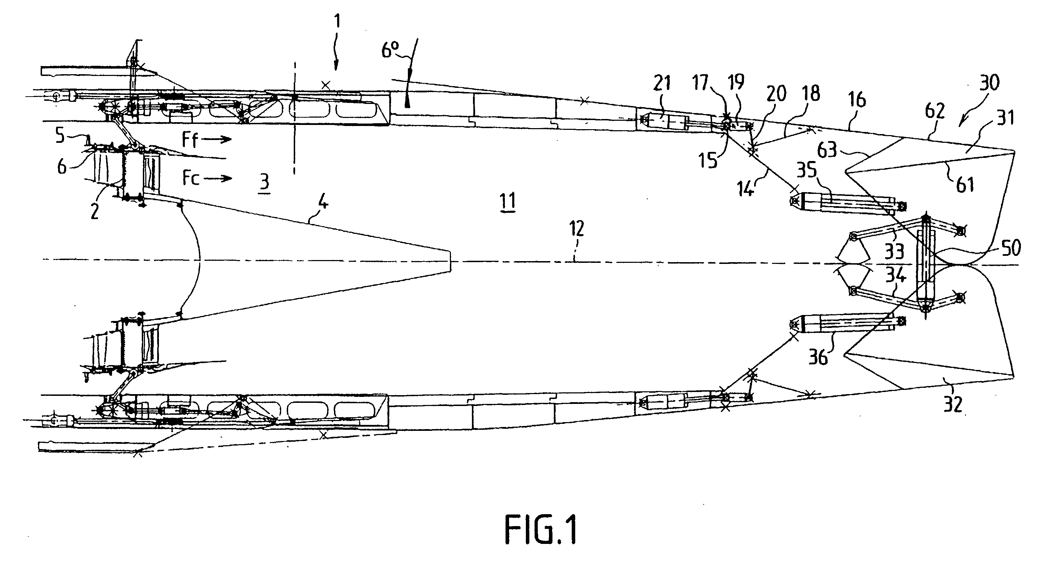

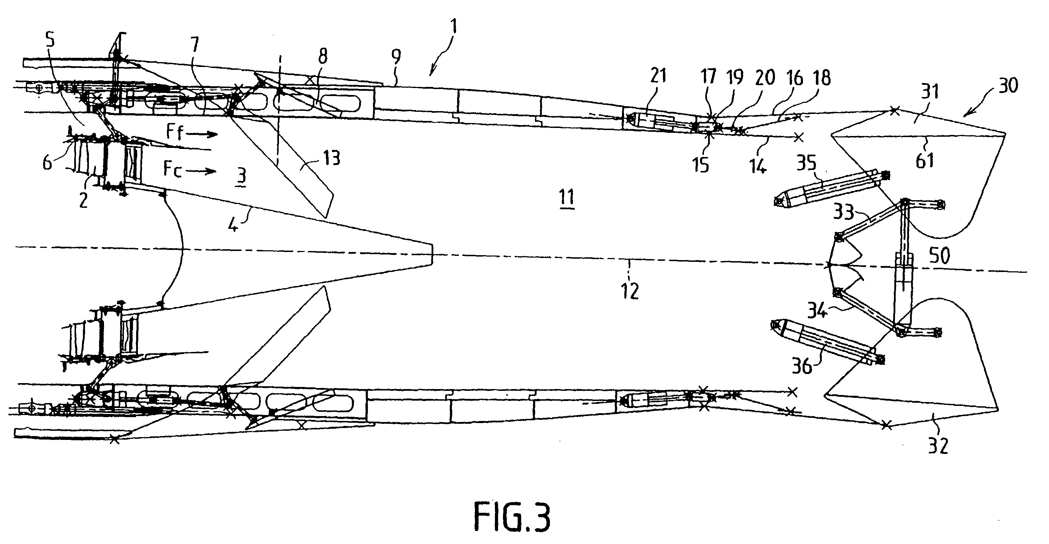

La paroi interne 7 de la structure fixe 8 délimite une chambre interne cylindrique 11 ayant un axe de révolution 12 confondu avec l'axe du turboréacteur, dans laquelle le flux chaud Fc délivré par la turbine et le flux froid Ff délivré par le canal annulaire 5 se mélangent, notamment grâce à un mélangeur à lobes 13, tels que représentés sur la figure 3, les lobes étant en position rétractée sur la figure 1. Le mélange gazeux obtenu peut être enrichi en carburant par des rampes d'injection et subir une combustion complémentaire dans la chambre interne 11 afin d'augmenter la poussée du turboréacteur notamment dans la phase de décollage.

Des volets chauds 14 sont articulés à l'extrémité aval 15 de la paroi interne 7, et des volets froids 16 sont articulés à l'extrémité aval 17 du carénage 9 , les extrémités aval 15 et 17 se trouvant sensiblement dans le même plan transversal perpendiculaire à l'axe 12.

Les volets froids 16 sont reliés aux volets chauds 14 par des biellettes 18. Les volets chauds 14 sont reliés à un anneau de commande 19 par des biellettes 20. L'anneau de commande 19 est disposé dans un espace annulaire prévu entre la paroi interne 7 et le carénage 9, et est déplacé parallèlement à l'axe 12 au moyens d'une pluralité de vérins de commande synchronisés 21 ancrés sur la structure fixe 8.

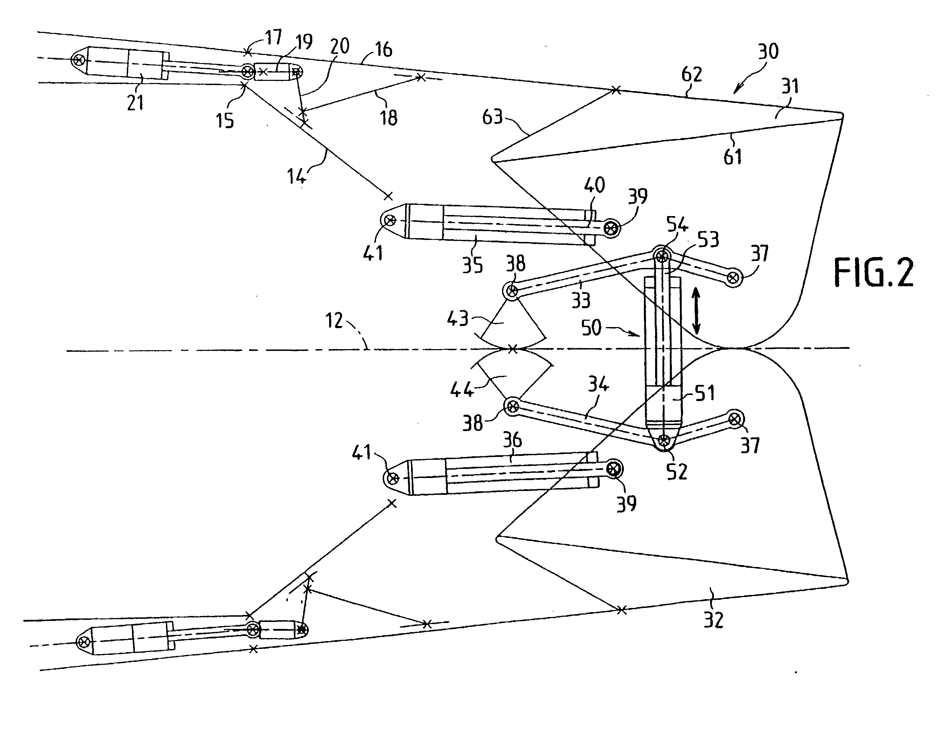

Les déplacements des volets froids 16 sont asservis aux déplacements des volets chauds 14 grâce aux biellettes 18, et les volets chauds 14 sont actionnés par les vérins 21 selon une loi en fonction des phases de vol, entre une position convergente maximale, dans la configuration de croisière montrée sur les figures 1 et 2, et une position sensiblement cylindrique, dans les configurations de décollage et d'atterrissage montrées sur les figures 3 à 7.

Dans la configuration de croisière, ainsi que cela se voit sur les figures 1 et 2, les volets froids 16 sont légèrement convergents et sont disposés dans le prolongement de la partie terminale du carénage 9. Dans cette configuration les volets froids 16 font un angle au plus égal à 6° avec l'axe de révolution 12. Dans les autres configurations, les volets froids 16 divergent vers l'extérieur.

En aval des volets chauds 14 et des volets froids 16, est prévu un dispositif d'inversion de poussée 30. Ce dispositif 30 comporte deux paupières identiques 31 et 32 disposées symétriquement par rapport à un plan horizontal passant par l'axe de révolution 12 et perpendiculaire au plan des figures 1 à 7.

Ces paupières 31 et 32 sont portées par la structure fixe 8, d'une part, au moyen de deux paires de bras 33, 34 et de deux paires de vérins de commande 35, 36, chaque paire de bras et chaque paire de vérins étant disposées latéralement à l'extérieur des paupières 31 et 32 et à l'intérieur d'un prolongement latéral de la structure fixe 8.

Plus précisément, la paupière supérieure 31 est montée articulée à l'extrémité aval 37 de deux bras supérieurs 33 dont les extrémités amont 38 sont articulées sur la structure fixe 8, et est articulée sur les extrémités libres 39 des tiges 40 des vérins de commande supérieurs 35, eux mêmes articulées en 41 sur la structure fixe 8. La paupière inférieure 32 est montée de la même manière sur les deux bras de commande inférieurs 34 et les deux vérins inférieurs 36.

Les bras 33 et 34 d'une paire de bras comportent, centrés en 38, des secteurs dentés 43, 44 qui égrènent entre eux et qui assurent la symétrie du déplacement des axes de pivotement 37 des deux paupières 31 et 32 par rapport au plan axial de symétrie.

Un vérin 50 est interposé entre les deux bras 33 et 34 d'une paire de bras. Le cylindre 51 de ce vérin 50 est articulé au point 52 sur le bras inférieur 34, et sa tige 53 est articulé au point 54 sur le bras supérieur 33, les points 52 et 54 étant symétriques par rapport au plan axial de symétrie des paupières 31 et 32.

Chaque paupière 31, 32 présente un corps en forme d'arceau de section triangulaire, délimité par une paroi interne 61, une paroi externe 62 et une paroi avant 63.

Dans la configuration de croisière, montrée sur les figures 1 et 2, la paroi externe 62 est située dans le prolongement des volets froids 16, et forme un angle de 6° avec l'axe de révolution 12. Les volets froids 16 s'étendent vers l'arrière sur une distance sensiblement égale au double de la longueur des volets chauds 14. La section d'entrée des paupières 31 et 32, définie par la jonction des parois internes 61 et des parois avant 63, est supérieure à la section de sortie des volets chauds 14. Les parois internes 61 constituent une tuyère divergente dans la configuration de croisière. Dans cette configuration, le vérin 50 et les vérins de commande 35 et 36 sont dans la position rétractée.

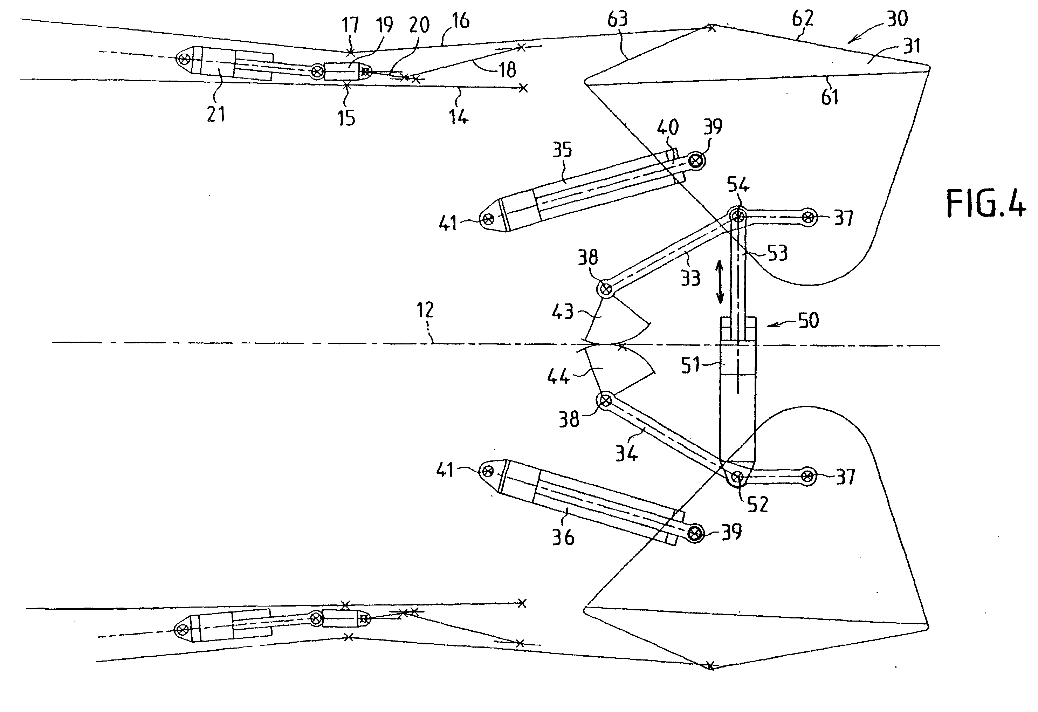

Dans la configuration de décollage montée sur les figures 3 et 4, le vérin 50 est dans la position d'extension et les vérins de commande 35 et 36 sont dans la position rétractée. En outre, les volets chauds 14 sont dans l'alignement de la paroi interne 7. Les axes d'articulation 37 des bras 33 et 34 et les axes d'articulation 39 des vérins de commande 35 et 36 sur les paupières 31 et 32, sont disposés de telle manière que dans cette configuration de décollage, les parois internes 61 des paupières 31 et 32 sont également dans le prolongement de la paroi interne 7 de la structure fixe 8. Les volets froids 16 sont dans une configuration divergente et assurent sans obstacle la continuité aérodynamique du carénage 9 et de la paroi externe 62 des paupières 31 et 32.

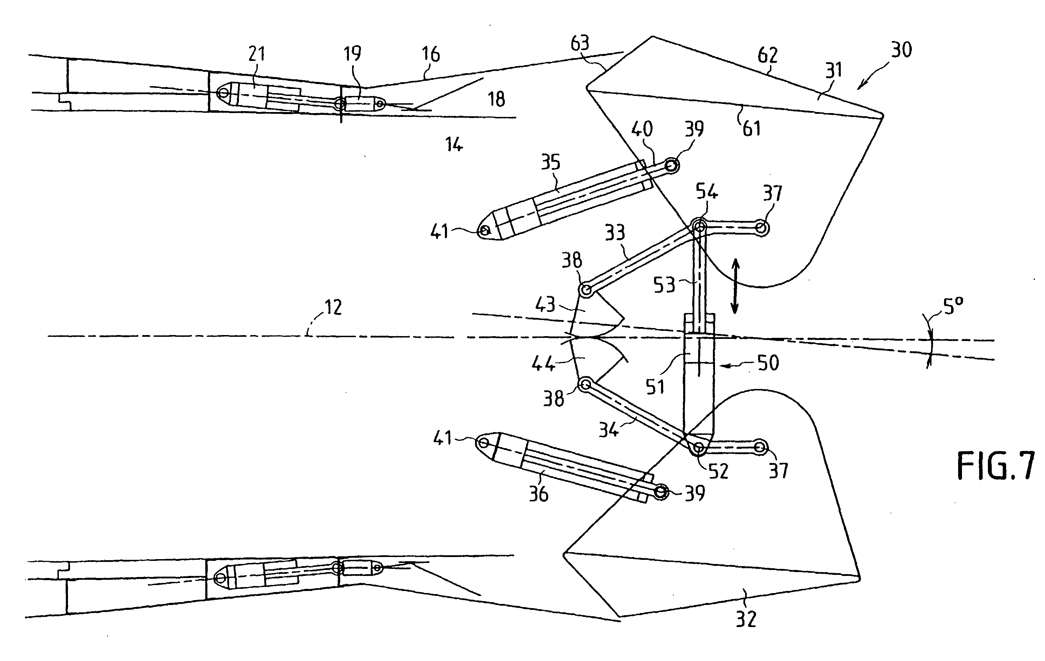

Partant de la configuration de décollage montrée sur les figures 3 et 4, il est possible de rétracter davantage le vérin de commande inférieur 36 et de sortir légèrement la tige du vérin de commande supérieur 35, afin d'incliner les parois internes 61 des paupières 31 et 32 de 5° environ par rapport à l'axe de révolution 12, ainsi que cela est montré sur la figure 7. Grâce à cette disposition, le jet de gaz est incliné de 5° vers le sol lors du décollage. Cette disposition permet principalement de diminuer les surfaces de dérive et de gouverne de l'avion dimensionnées au cas de panne d'un moteur d'aile dans la phase de décollage

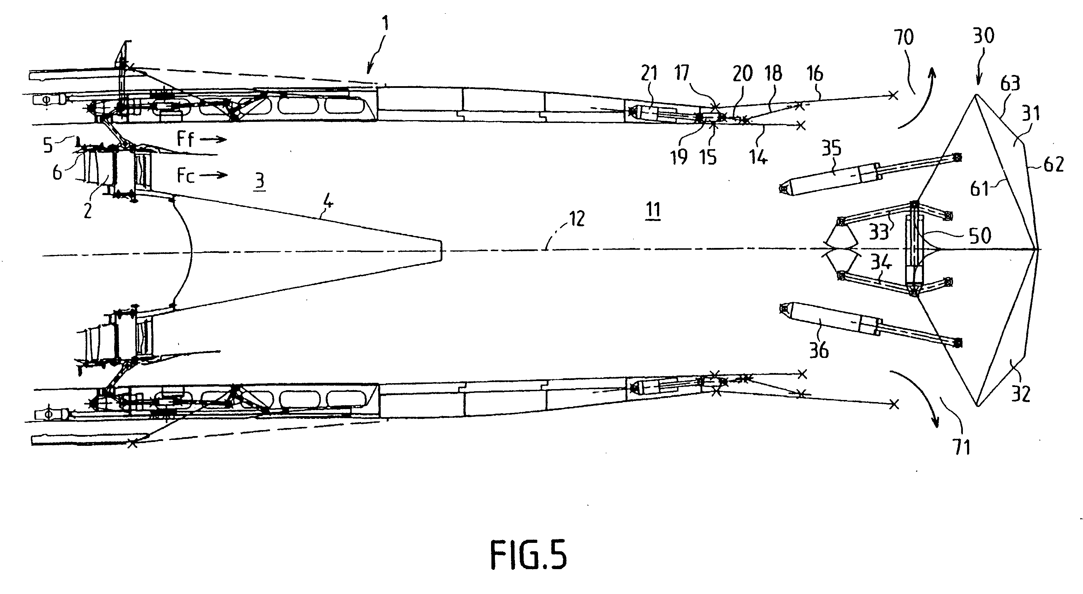

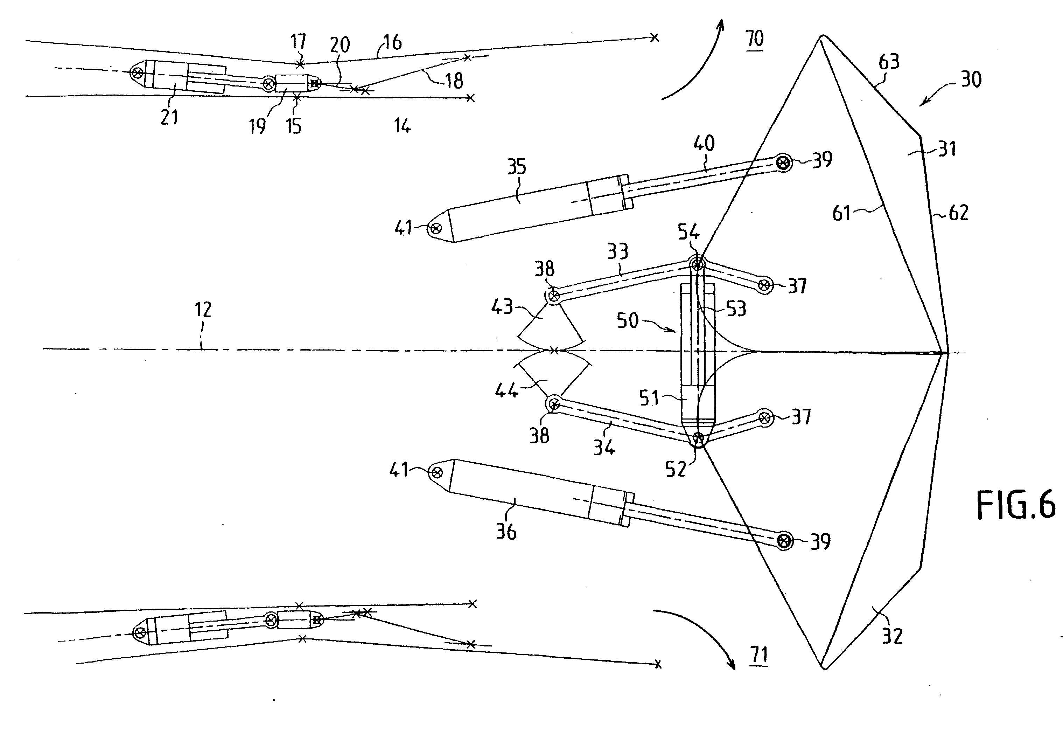

Le but des paupières 31 et 32 est de réaliser la fonction inversion de poussée lors de l'atterrissage. A cet effet, les deux paupières 31 et 32 sont basculées autour des axes d'articulation 37 par extension des tiges des vérins de commande 35 et 36, les vérins verticaux 50 étant alors rétractés. Dans cette configuration d'inversion de poussée montrée sur les figures 5 et 6, les parois internes 61 des deux paupières 31 et 32 sont jointives dans le plan axial de symétrie et dévient le flux gazeux délivré par la chambre 11 vers l'avant et vers l'extérieur, ce qui assure le freinage de l'avion, par les ouvertures latérales 70, 71 qui s'ouvrent entre les volets froids 16 et les paupières 31, 32. Dans cette configuration, les volets chauds 14 sont dans le prolongement de la paroi interne 7 de la structure fixe 8 et les volets froids 16 divergent vers l'extérieur.

## Revendications

1. Turboréacteur pour avion supersonique comportant une tuyère d'éjection, du type comportant un canal d'éjection (7) disposé dans un carénage externe (9) et par lequel s'écoule en fonctionnement un flux gazeux, une série de volets chauds (14) montés pivotants à l'extrémité aval (15) dudit canal (7), une série de volets froids (16) montés pivotants à l'extrémité aval (17) du carénage (9), un dispositif (30) d'inversion de poussée comprenant deux paupières (31, 32) identiques montées pivotantes en aval du canal d'éjection (7), de part et d'autre d'un plan axial de symétrie, lesdites deux paupières (31, 32) occupant, soit une position d'inversion de poussée, dans laquelle elles font saillie transversalement dans le jet gazeux en aval des volets pour dévier ce jet vers l'avant, soit une position de jet direct, dans laquelle elles sont dans le prolongement des volets froids (16), des moyens de commande des volets chauds et des volets froids selon les configurations de vol, et des moyens de commande (35, 36) des paupières (31, 32) de la position de jet direct à la position d'inversion de poussée ou inversement de la position d'inversion de poussée à la position de jet direct,
**caractérisée par le fait qu'**elle comporte en outre des moyens (50) pour écarter lesdites deux paupières (31, 32) du plan axial de symétrie dans la configuration de décollage.

2. Turboréacteur selon la revendication 1, **caractérisée par le fait que** les volets froids (16) sont actionnés pour assurer un profil aérodynamique sans obstacle avec lesdites deux paupières (31, 32) dans la configuration de décollage et la configuration de croisière.

3. Turboréacteur selon la revendication 2, **caractérisée par le fait que** les volets froids (16) sont asservis aux volets chauds (14) par des biellettes (18).

4. Turboréacteur selon l'une quelconque des revendications 1 à 3, **caractérisée par le fait que** les deux paupières (31, 32) sont articulées aux extrémités de deux paires de bras de support (33, 34) latérales et aux extrémités d'au moins une paire de vérins (35, 36), les bras (33, 34) de chaque paire de bras et les vérins (35, 36) de chaque paire de vérins étant disposés symétriquement par rapport au plan axial de symétrie et articulés à leurs autres extrémités (38) sur une structure fixe (8), et lesdits vérins (35, 36) formant les moyens de commande des paupières (31, 32).

5. Turboréacteur selon la revendication 4, **caractérisée par le fait que** les moyens pour écarter les paupières (31, 32) dans la configuration de décollage comportent un vérin (50) interposé entre les bras (33, 34) d'une paire de bras.

6. Turboréacteur selon la revendication 4 ou 5, **caractérisée par le fait que** les deux bras (33, 34) d'une paire de bras de support sont reliés par des secteurs dentés (43, 44) afin d'assurer le déplacement symétrique des axes d'articulation (38) des paupières (31, 32) sur lesdits bras (33, 34) par rapport au plan axial de symétrie.

7. Turboréacteur selon l'une quelconque des revendications 4 à 6, **caractérisée par le fait que** les vérins (35, 36) formant les moyens de commande des paupières (31, 32) peuvent être actionnés de manière antagoniste dans la configuration de décollage afin de dévier légèrement le flux gazeux éjecté.

## Claims

1. Turbojet engine for a supersonic aircraft comprising an exhaust nozzle of the type which comprises an exhaust duct (7) arranged in an external fairing (9) and through which a gas stream flows during operation, a series of hot flaps (14) pivotally mounted at the downstream end (15) of the said duct (7), a series of cold flaps (16) pivotally mounted at the downstream end (17) of the fairing (9), a thrust reversal device (30) comprising two identical eyelids (31, 32) pivotally mounted downstream of the exhaust duct (7), one on either side of an axial plane of symmetry, the said two eyelids (31, 32) occupying either a thrust reversal position in which they project transversely into the gas jet downstream of the flaps in order to divert this jet towards the front, or a direct jet position in which they are in the continuation of the cold flaps (16), means for driving the hot flaps and cold flaps depending on the flight configurations, and means (35, 36) for driving the eyelids (31, 32) from the direct jet position to the thrust reversal position or, conversely, from the thrust reversal position to the direct jet position, **characterized in that** the exhaust nozzle additionally comprises means (50) for moving the said two eyelids (31, 32) away from the axial plane of symmetry in the take-off configuration.

2. Turbojet engine according to Claim 1, **characterized in that** the cold flaps (16) are actuated to provide an obstacle-free aerodynamic profile with the said two eyelids (31, 32) in the take-off configuration and the cruise configuration.

3. Turbojet engine according to Claim 2, **characterized in that** the cold flaps (16) are slaved to the hot flaps (14) by means of connecting rods (18).

4. Turbojet engine according to any one of Claims 1 to 3, **characterized in that** the two eyelids (31, 32) are hinged at the ends of two lateral pairs of support arms (33, 34) and at the ends of at least one pair of actuators (35, 36), the arms (33, 34) of each pair of arms and the actuators (35, 36) of each pair of actuators being arranged symmetrically with respect to the axial plane of symmetry and hinged at their other ends (38, 41) on a stationary structure (8), and the said actuators (35, 36) forming the means for driving the eyelids (31, 32).

5. Turbojet engine according to Claim 4, **characterized in that** the means for moving away the eyelids (31, 32) in the take-off configuration comprise an actuator (50) interposed between the arms (33, 34) of a pair of arms.

6. Turbojet engine according to Claim 4 or 5, **characterized in that** the two arms (33, 34) of a pair of support arms are connected by means of toothed sectors (43, 44) in order to ensure symmetrical displacement, with respect to the axial plane of symmetry, of the hinge pins (37) used to hinge the eyelids (31, 32) on the said arms (33, 34).

7. Turbojet engine according to any one of Claims 4 to 6, **characterized in that** the actuators (35, 36) forming the means for driving the eyelids (31, 32) can be actuated antagonistically in the take-off configuration in order to slightly divert the exhausted gas stream.

## Patentansprüche

1. Turbotriebwerk für ein Überschallflugzeug mit einer Schubdüse, die einen Schubkanal (7) aufweist, der in einer Außenverkleidung (9) angeordnet ist und durch den im Betrieb ein Gasstrahl strömt, eine Reihe von Primärstromklappen (14) aufweist, die am hinteren Ende (15) dieses Kanals (7) schwenkbar angebracht sind, eine Reihe von Mantelstromklappen (16) aufweist, die am hinteren Ende (17) der Verkleidung (9) schwenkbar angebracht sind, eine Schubumkehrvorrichtung (30) aufweist, die zwei identische Klappen (31, 32) umfasst, die hinten am Schubkanal (7) beiderseits einer axialen Symmetrieebene schwenkbar angebracht sind, wobei diese beiden Schubumkehrklappen (31, 32) entweder eine Schubumkehrstellung einnehmen, bei der sie hinter den Klappen quer in den Gasstrahl hineinragen, um diesen Strahl nach vom umzulenken, oder eine Direktstrahlstellung einnehmen, bei der sie sich in der Verlängerung der Mantelstromklappen (16) befinden, ferner Steuermittel zur Steuerung der Primärstromklappen und der Mantelstromklappen entsprechend den Flugkonfigurationen aufweist, sowie Steuermittel (35, 36) zur Steuerung der Schubumkehrklappen (31, 32) aus der Direktstrahlstellung in die Schubumkehrstellung oder umgekehrt aus der Schubumkehrstellung in die Direktstrahlstellung aufweist,
**dadurch gekennzeichnet,**
**dass** es Mittel (50) aufweist, um die beiden Schubumkehrklappen (31, 32) in der Start-Konfiguration von der axialen Symmetrieebene abzuspreizen.

2. Turbotriebwerk nach Anspruch 1,
**dadurch gekennzeichnet,**
**dass** die Mantelstromklappen (16) betätigt werden, um in der Start-Konfiguration und in der Reise-Konfiguration mit den beiden Schubumkehrklappen (31, 32) zusammen ein hemmnisfreies aerodynamisches Profil zu gewährleisten.

3. Turbotriebwerk nach Anspruch 2,
**dadurch gekennzeichnet,**
**dass** die Mantelstromklappen (16) durch Schwingarme (18) an die Primärstromklappen (14) angebunden sind.

4. Turbotriebwerk nach einem der Ansprüche 1 bis 3,
**dadurch gekennzeichnet,**
**dass** die beiden Schubumkehrklappen (31, 32) an den Enden von zwei seitlichen Paaren von Stützarmen (33, 34) und an den Enden von mindestens einem Paar Zylinder (35, 36) angelenkt sind, wobei die Arme (33, 34) jedes Paars von Armen und die Zylinder (35, 36) jedes Paars von Zylindern bezogen auf die axiale Symmetrieebene symmetrisch angeordnet und mit ihren anderen Enden (38) an einem festen Aufbau (8) angelenkt sind, und wobei diese Zylinder (35, 36) die Steuermittel für die Schubumkehrklappen (31, 32) bilden.

5. Turbotriebwerk nach Anspruch 4,
**dadurch gekennzeichnet,**
**dass** die Mittel zum Abspreizen der Schubumkehrklappen (31, 32) in der Start-Konfiguration einen Zylinder (50) umfassen, der zwischen den Armen (33, 34) eines Paars von Armen angeordnet ist.

6. Turbotriebwerk nach Anspruch 4 oder 5,
**dadurch gekennzeichnet,**
**dass** die beiden Arme (33, 34) eines Paars von Stützarmen durch Zahnsegmente (43, 44) miteinander verbunden sind, um das symmetrische Verschieben der Gelenkachsen (38) der Schubumkehrklappen (31, 32) an diesen Armen (33, 34), bezogen auf die axiale Symmetrieebene, zu gewährleisten.

7. Turbotriebwerk nach einem der Ansprüche 4 bis 6,
**dadurch gekennzeichnet,**
**dass** die Zylinder (35, 36), die die Steuermittel für die Schubumkehrklappen (31,32) bilden, in der Start-Konfiguration gegenwirkend betätigt werden können, um den ausgestoßenen Gasstrahl leicht umzulenken.
